# EUROPEAN PATENT SPECIFICATION

(11) **EP 1 319 590 B1**
(45) Date of publication and mention of the grant of the patent: **03.06.2009**
(21) Application number: 02027959.2
(22) Date of filing: 13.12.2002
(51) Int. Cl.: B62K 11/06, B62K 11/02

(54) **Scooter type motorcycle**
Motorroller
Scooter

(30) Priority: 14.12.2001 JP 2001381851; 20.02.2002 JP 2002042934; 04.10.2002 JP 2002291982
(43) Date of publication of application: 18.06.2003
(73) Proprietor: Yamaha Hatsudoki Kabushiki Kaisha, Iwata-shi, Shizuoka-ken (JP)
(72) Inventor: Hakamata, Takeo, c/o Yamaha Hatsudoki Kabushiki Kaisha, Iwata-shi, Shizuoka-ken (JP)
(74) Representative: Grünecker, Kinkeldey, Stockmair & Schwanhäusser Anwaltssozietät

(56) References cited:
- FR-A- 2 624 084
- US-A- 4 660 854
- US-A- 6 142 253
- PATENT ABSTRACTS OF JAPAN vol. 015, no. 441 (M-1177), 11 November 1991 (1991-11-11) & JP 03 186490 A (SUZUKI MOTOR CORP), 14 August 1991 (1991-08-14)

## Description

The present invention relates to a scooter type motorcycle according to the preamble part of claim 1. In particular, the present invention relates to a scooter type motorcycle which can be divided into upper and lower frames.

The invention relates to a scooter type motorcycle which can be divided into upper and lower frames.

A conventional scooter type motorcycle having a vehicle body frame including two tank rails and two down tubes is, for example, shown in JP-A-2001-010579. In the vehicle body frame disclosed in this publication, a pair of right and left tank rails welded to an upper part of a head pipe extends downward and backward, and a pair of right and left down tubes welded to a lower end of the head pipe extends downward and rearward below the tank rails. The head pipe and the down tubes have parts extending generally horizontally at foot rests between steering handlebars and a seat, and the rear ends thereof are welded to a rear frame.

The rear frame comprises a pair of right and left engine bracket supporting a unit swing type power unit for up and down swinging movement, cross pipes connecting the front ends and rear ends, respectively, of the engine brackets and so forth. The engine brackets are connected to the tank rails and the down tubes.

The power unit of the conventional scooter type motorcycle incorporates an engine and a rear wheel, and is mounted on the vehicle body frame with a cylinder of the engine protruding from the rear into a space among the rear ends of the parts of the tank rails and the down tubes extending generally horizontally at the foot rests. In front of the cylinder in the space, a fuel tank is disposed.

The conventional vehicle body frame for such a scooter type motorcycle constituted as above has a large number of pipe members and thus heavy in weight. Also, the work of assembling the power unit and the fuel tank to the vehicle body frame is troublesome and decreases productivity. The reason why the assembly work is troublesome is that the work must be conducted avoiding the four pipe members (the tank rails and the down tubes).

Namely, when the power unit is mounted on the vehicle body frame, the four pipe members around the cylinder disturb the work. When the fuel tank is mounted on the vehicle body frame, the fuel tank must be inserted from below into the space among the four pipes which are located at relatively low positions since they are located at the foot rests.

Moreover, in a scooter type motorcycle mounting a large engine, however, components mounted on foot rests, such as a fuel tank, and a power unit are longitudinally arranged at low positions. Also, such a scooter type motorcycle has a large length in the longitudinal direction of the vehicle as compared to general motorcycles. Thus, with a conventional vehicle body frame, it is difficult to facilitate the work of assembling components to the vehicle body frame or to improve the rigidity of the vehicle body frame while reducing the weight thereof. The invention has been made to solve the problems.

US 6,142,253 discloses a scooter type motorcycle which is readable on the preamble part of claim 1.

US 4,660,854 and FR 2 624 084 A1 are both related to frame constructions of conventional motorcycles, In which respective ends of lower tubes, respectively a lower piece, are/is detachably connected to front and rear portions of an upper frame of said motorcycle.

It is an objective of the present invention to provide a scooter type motorcycle comprising a vehicle body frame which can facilitate assembly and maintenance work.

According to the present invention, said objective is solved by a scooter-type motorcycle having the combination of features of Independent claim 1.

Preferred embodiments of the present invention are laid down In the subclaims.

According to a preferred embodiment, the power unit is supported with the upper frame and vehicle components located in front of the power unit are supported with the lower frame. Thus, the vehicle components can be separately assembled to the upper and lower frames.

Further, a vehicle body frame for such a scooter type motorcycle comprises an upper frame extending from a head pipe toward the rear of a vehicle body and made of an aluminum alloy, and a lower frame extending downward from the upper frame, wherein the upper frame comprises a front half including a pair of right and left down frames having a closed transverse cross-section and extending from the head pipe to foot rests, and a rear half extending backward from a rear end of the front half, and wherein the front half is detachably connected to a front end of the lower frame, and the rear half is detachably connected to a rear end of the lower frame and supports a unit swing type power unit including a rear wheel.

Preferably, in the vehicle body frame, the upper frame can be reinforced from below by the lower frame.

According to a further embodiment, a rear half of the upper frame has a front part formed into a generally U-shape having an open side facing generally in a width direction of the vehicle body and a rear part formed into a generally U-shape having an open side facing generally in a vertical direction.

Accordingly, the front part of the rear half which pivots the power unit has high lateral rigidity. Thus, the torsional rigidity of the front part of the vehicle body frame can be improved by connecting the rear half to the front half. Also, the rear part of the rear half which supports the rear cushion unit has high vertical rigidity, so that the upper limit of cushion reaction force which can be applied from the rear cushion unit to the rear half can be increased.

Furthermore, a scooter type motorcycle according to another embodiment comprises a vehicle body frame, wherein the rear half of the upper frame has reinforcing ribs having an X-shape in side view and integrally formed therewith within the front part having a generally U-shape.

Accordingly, the reinforcing ribs reinforce the front part of the rear half and enhance the torsional rigidity of the front part.

Still another embodiment of a scooter type motorcycle comprises a vehicle body frame having a frame member extending from a head pipe toward the rear of a vehicle body and made of an aluminum alloy, wherein the frame member comprises a front half including a pair of right and left down frames having a closed transverse cross-section and extending from the head pipe to foot rests, and a rear half extending backward from a rear end of the front half, and wherein the front half has a closed transverse cross-section and the rear half has a front part formed into a generally U-shape having an open side facing generally in a width direction of the vehicle body and a rear part formed into a generally U-shape having an open side facing generally in a vertical direction.

Therefore, the front part of the rear half has high lateral rigidity. Thus, the torsional rigidity of the front part of the vehicle body frame can be improved by connecting the rear half to the front half. Also, since the rear part of the rear half has high vertical rigidity, the upper limit of the load which can be applied from the rear wheel side to the rear half can be increased.

In the following, an embodiment of a scooter type motorcycle according to the present invention will be described in detail with reference to the drawings, wherein:
- FIG. 1: is a detailed side view of a scooter type motorcycle according to a first embodiment;
- FIG. 2: is a side view of a scooter type motorcycle according to the first embodiment;
- FIG. 3: is a plan view of a front part of a vehicle body frame of a scooter type vehicle according to the first embodiment;
- FIG. 4: is a side view of a second embodiment of a scooter type motorcycle, having a vehicle body frame;
- FIG. 5: is a plan view of the vehicle body frame;
- FIG. 6: is a side view of a front half of an upper frame as part of the vehicle body frame;
- FIG. 7: is a plan view of the front half of the upper frame;
- FIG. 8: is a side view of a rear half of the upper frame as part of the vehicle body frame;
- FIG. 9: is a plan view of the rear half of the upper frame;
- FIG. 10: is a side view of a lower frame as a further part of the vehicle body frame;
- FIG. 11: is a plan view of the lower frame;
- FIG. 12: is a cross-sectional view of a left down frame, taken along the line XII-XII in FIG. 6;
- FIG. 13: is a cross-sectional view of a longitudinal extending portion on the left side of the vehicle body, taken along the line XIII-XIII in FIG. 8;
- FIG. 14: is a cross-sectional view of the longitudinal extending portion on the left side of the vehicle body, taken along the line XIV-XIV in FIG. 8; and
- FIG. 15: is a perspective view of the body frame of the scooter type motorcycle.

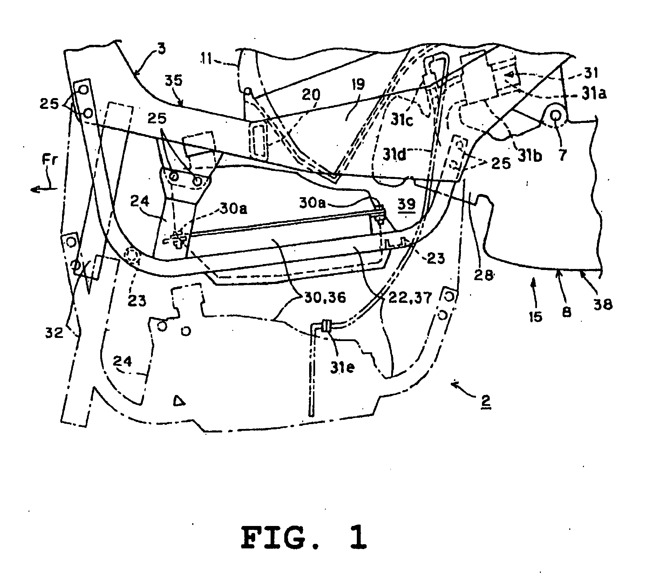

Description will be hereinafter made of a first embodiment of a scooter type motorcycle in detail with reference to FIG. 1 to FIG. 3.

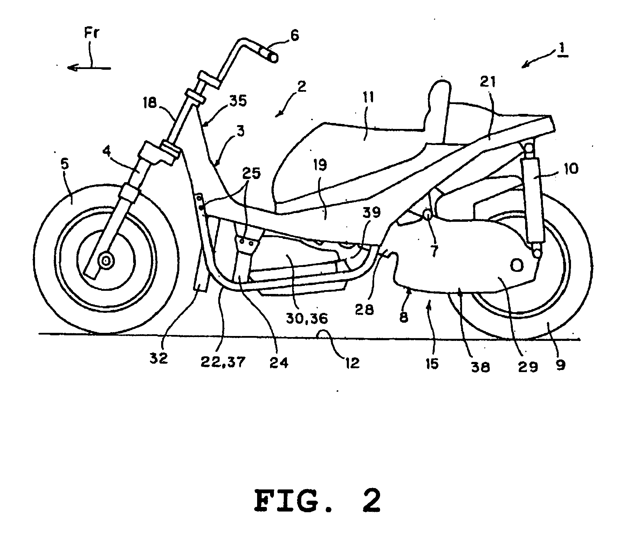

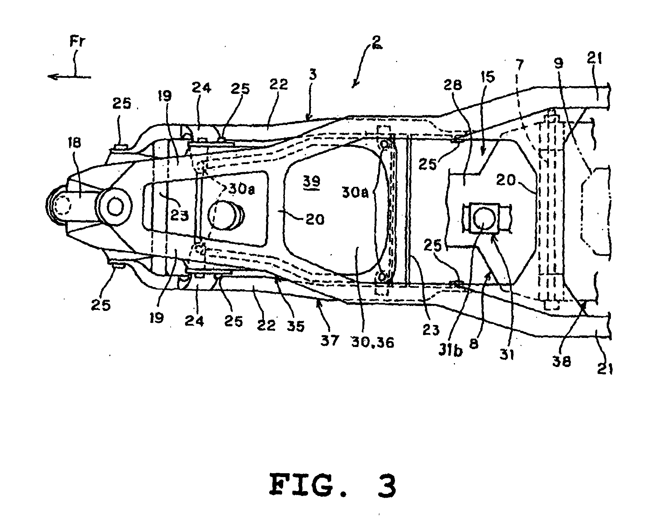

FIG. 1 is a side view of an essential part of a scooter type vehicle, FIG. 2 is the side view of the scooter type motorcycle, and FIG. 3 is a plan view of a front part of the vehicle body frame of the scooter type vehicle.

A straddle type of vehicle exemplified by a scooter in the drawing is provided with a reference numeral 1 and its forward direction is indicated with an arrow Fr.

The vehicle body 2 of the vehicle 1 is made up of: a vehicle frame 3 made as a framework or the skeleton of the vehicle body 2, a front fork 4 supported for free steering at the front end of the vehicle body frame 3, a front wheel 5 supported for free rotation at the lower end of the front fork 4, handlebars 6 supported at the top end of the front fork 4, a rear arm 8 disposed behind the vehicle body frame 3 with its front end pivoted with a pivot shaft 7 on the vehicle body frame 3 to extend in front and rear directions so that its rear end can swing up and down, a rear wheel 9 supported rotatably at the rear end (up-and-down swinging portion) of the rear arm 8, a shock absorber 10 for resiliently supporting the rear end of the rear arm 8 on the rear part of the vehicle body frame 3, and a seat 11 for a rider to sit astraddle. Thus, the vehicle body 2 is supported with the front and rear wheels 5 and 9 on the road surface 12 for running.

The vehicle 1 is also provided with a driving means 15 that constitutes one part of the rear arm 8, and that is supported on the vehicle body frame 3 to drive the rear wheel 9. The vehicle body frame 3 comprises: a head pipe 18 constituting the front upper end of the vehicle body frame 3 and supporting the front fork 4, a pair of right and left main frames 19, 19 extending from the head pipe 18 down rearward, cross members 20 for interconnecting the right and left main frames 19, 19, and a pair of right and left seat frames 21, 21 extending from the rear ends of the right and left main frames 19, 19 up rearward to support the seat 11.

The vehicle body frame 3 also comprises: a pair of right and left down-tubes 22, 22 of an approximate U-shape in side view, cross members 23 for interconnecting the right and left down-tubes 22, 22, a pair of right and left reinforcing members 24, 24 projecting upward from the longitudinal middle part of the down-tubes 22, 22, and tightening members 25 for detachably tightening the front and rear ends of the down-tubes 22, 22 and the projecting ends of the reinforcing members 24, 24 to the respective main frames 19, 19.

The driving means 15 is made up of: the internal combustion engine 28 that constitutes the front part of the rear arm 8 and is pivoted with the pivot shaft 7 on the main frame 19; a power transmitting device 29 that constitutes the rear part of the rear arm 8, supports the rear wheel 9, and transmits the power of the engine 28 to the rear wheel 9, a fuel tank 30 supported in the longitudinal middle part of the down-tubes 22 by means of tightening members 30a, a fuel supplying device 31 connected to the internal combustion engine 28 to supply fuel held in the fuel tank 30 together with air to the engine 28, and a radiator 32 supported with the front ends of the down-tubes 22 for cooling coolant water for cooling the engine 28. The engine 28, the rear arm 8, the rear wheel 9 and so forth constitutes a unit swing type power unit.

The fuel supplying device 31 is made up of: a throttle valve 31 b provided in an intake air passage 31a interconnecting the exterior and interior of the engine 28, a fuel injection valve 31c for injecting fuel through the intake air passage 31a into the engine 28, a fuel tube 31d for supplying fuel in the fuel tank 30 to the fuel injection valve 31c, and a coupler 31e for detachably connecting the fuel tank 30 side end of the fuel tube 31d to the fuel tank 30 side.

Of the parts of the vehicle body frame 3, the head pipe 18 supporting the front fork 4, both of the main frames 19, the cross members 20, and both of the seat frames 21 are formed by aluminum casting as an integral member, a first frame 35. Both of the down-tubes 22, the cross members 23, and the reinforcing members 24, all made of steel pipes, for supporting the fuel tank 30 and the radiator 32, constituting one part 36 of the components of the driving means 15, constitute a second frame 37. The second frame 37 is detachably attached to the first frame 35 by means of the tightening members 25.

The internal combustion engine 28, the power transmitting device 29, and the fuel supplying device 31 constitute the other part 38 of the components of the driving means 15 are pivoted with the pivot shaft 7, for up and down swinging movement, at the rear ends of the main frames 19 of the first frame 35.

The first frame 35 serves as the upper part of the vehicle body frame 3, and the second frame 37 serves as the lower part of the vehicle body frame 3. Namely, the upper frame and the lower frame are constituted by the first frame 35 and the second frames 37, respectively. Almost all of the one part 36 of the driving means 15 is placed in the space 39 sandwiched with the first and second frames 35 and 37 from above and under.

In the driving means 15, the engine 28 may be replaced with an electric motor and the fuel tank 30 may be replaced with a battery for supplying electric power to the electric motor.

In the vehicle body frame 3 for a scooter type motorcycle constituted as above, the work of putting the components of the above vehicle 1 together may be carried out by assembling the front fork 4 and the unit swing type power unit to the first frame 35 to form a first assembly on an assembly line, assembling the one part 36 (the fuel tank 30 and the radiator 32) of the driving means 15 to the second frame 37 to form a second assembly on another assembly line, and putting the first and second assemblies together by means of the tightening members 25. The work of putting together using the tightening members 25 is simple and can be carried out quickly.

By assembling the vehicle components to the body frame 3 as described above, the unit swing type power unit is supported with the first frame 35, and the fuel tank 30 and the radiator 32 located in front of the power unit is supported with the second frame 37.

Thus, the vehicle components can be assembled to the first frame 35 and the second frame 37 separately, so that the vehicle components can be put on the first frame 35 or the second frame 37 without being interfered with by other parts. Thus, there can be form a vehicle body frame for a scooter type motorcycle which facilitates the assembly work and provide high productivity.

Also, in comparison with conventional art by which the front fork 4 and the driving means 15 are attached sequentially to the vehicle frame 3 on a single line, the time necessary for the assembly work can be shortened.

Also the one part 36 of the driving means 15 is placed in the space 39 surrounded with the first and second frames 35 and 37. Therefore, in the case the components of the vehicle 1 are to be put together, it may be arranged that first the one part 36 of the driving means 15 is supported with the second frame 37 in the state separate from the first frame 35, and second the second frame 37 is tightened with the tightening members 25 to the first frame 35. In this way, the one part 36 of the driving means 15 is installed in the state as inserted into the internal space of the vehicle body frame 3.

Thus, with the above-described assembly work, the conventional work of inserting the one part 36 of the driving means 15 into the interior of the vehicle body frame 3 through a narrow opening becomes unnecessary and accordingly the above-described assembly work is facilitated.

Also as described above, since the one part 36 of the driving means 15 need not be passed through the narrow opening, the size of the one part 36 is prevented from being limited, so that an intended capacity of the driving means 15 can be secured.

Also as described above, the rear wheel 9, and the engine 28 or the electric motor that constitute the other part 38 of the components of the driving means 15 are supported with the first frame 35, while the fuel tank 30 or the battery that constitute the one part 36 of the driving means 15 is supported with the second frame 37, so that the front wheel 5 is supported through the front fork 4 with the first frame 35 and the rear wheel 9 is also supported with the first frame 35. Thus, the first frame 35 can be supported in a stabilized manner with the front and rear wheels 5 and 9 on the workplace floor.

Therefore, since the first frame 35 is stabilized, the work of tightening the second frame 37 to the first frame 35 is facilitated.

In addition, since the empty fuel tank 30 or the battery is lighter than the engine 28 or the electric motor, the work of tightening the second frame 37 together with the fuel tank 30 or the battery to the first frame 35 is easy.

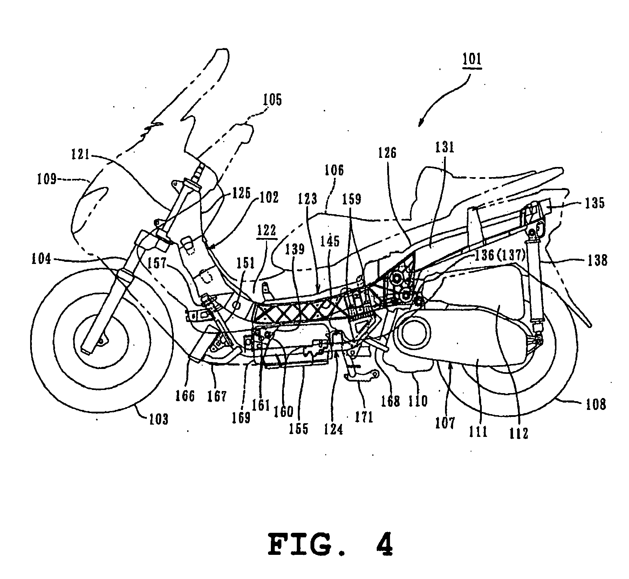

In the following, a second embodiment of a scooter type vehicle will be described in detail with reference to FIG. 4 to FIG. 15.

FIG. 4 is a side view of such a scooter type motorcycle employing a vehicle body frame.

A scooter type motorcycle (which will be hereinafter simply referred to as "scooter") according to this second embodiment in the drawings is provided with a reference numeral 101. The scooter 101 is constituted using a vehicle body frame 102. In Fig. 4, designated as 103 is a front wheel, as 104 is a front fork, as 105 are steering handlebars, as 106 is a seat, as 107 is a power unit for driving a rear wheel 108, and 109 is a vehicle body cover. The power unit 107 is of a conventionally known unit swing type comprising an engine 110 and a transmission case 111 integrated with each other and supporting a rear wheel 108 at its rear end. Power is transmitted from the engine 110 to the rear wheel 108 through a V-belt automatic transmission (not shown) provided in the transmission case 111. In FIG. 1, designated as 112, disposed above the transmission case 111 is an air cleaner of the engine 110.

The vehicle body frame 102 comprises: an upper frame 123 extending from a head pipe 121 rotatably supporting the front fork 104 and the steering handle 105, under the foot rests 122 and the seat 106, to the rear end of the vehicle body, and a lower frame 124 extending downward from a middle part of the upper frame 123. The upper frame 123 is made of an aluminum alloy and the lower frame 124 is made of an iron-base alloy.

The upper frame 123 comprises: a front half 125 extending from the head pipe 121 to the foot rests 122 and a rear half 126 welded to the rear end of the front half 125 and extending to the rear end of the vehicle body.

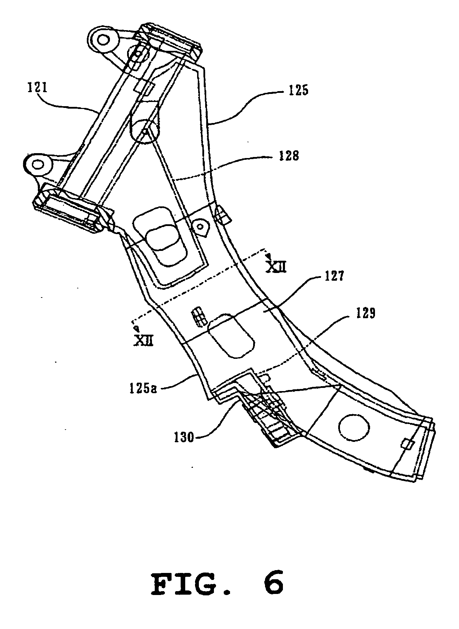

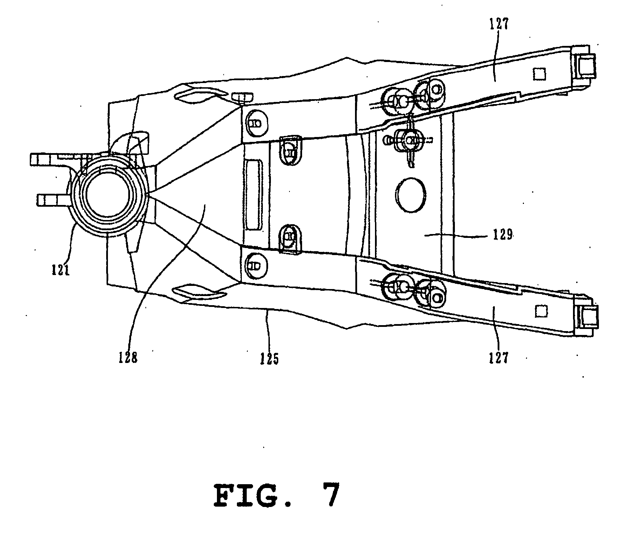

As shown in FIG. 6 and FIG. 7, the front half 125 comprises: a head pipe 121, a pair of right and left down frames 127 extending from the head pipe 121 downward and rearward, and two cross members 128 and 129 interconnecting the down frames 127. These parts are integrally formed by so-called gravity casting. The gravity casting is a casting method in which a molten metal is filled in a mold by gravity.

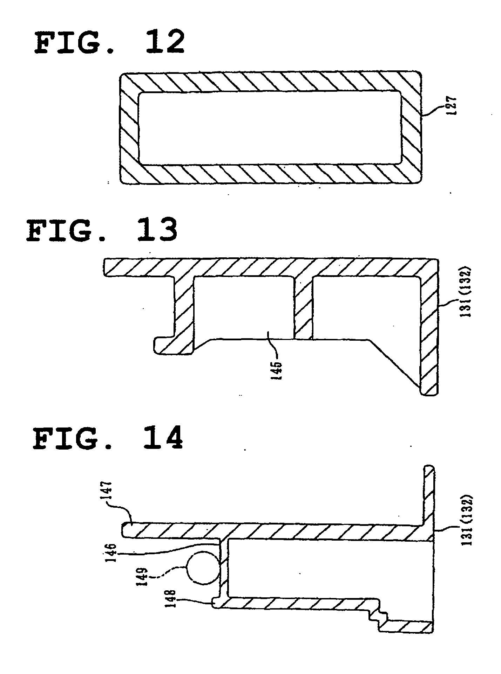

As shown in FIG. 12, each of the down frames 127 is formed into a box shape having a closed transverse cross-section. As shown in FIG. 6, of the two cross members 128 and 129, the front cross member 128 located on the head pipe 121 side has a closed longitudinal cross-section, and the rear cross member 129 has a L-shaped cross-section. Each of the down frames 127, 127 has an attaching seat 130 for attaching a hereinafter described front end of the lower frame 124 at a position in the vicinity of the rear cross member 129.

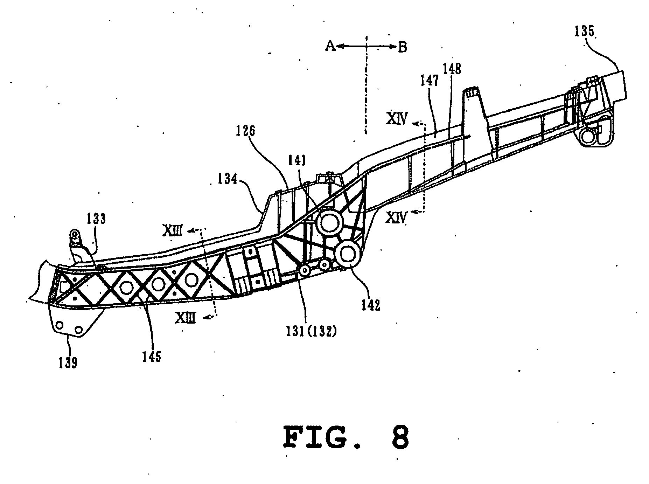

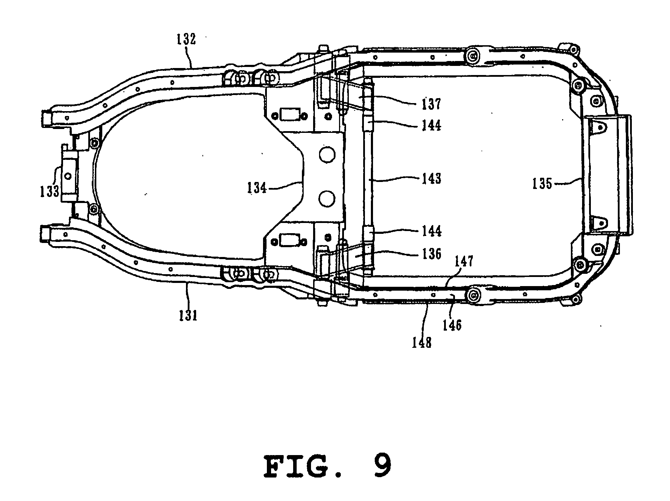

As shown in FIG. 8 and FIG. 9, the rear half 126 of the upper frame 123 comprises: left longitudinally extending portion 131 and a right longitudinally extending portion 132 extending on both sides of the width of the vehicle in a longitudinal direction of the vehicle body, and first to third cross members 133 to 135 connecting the longitudinally extending portions 131 and 132 at their front ends, middle points and rear ends, respectively. These parts are integrally formed by vacuum die-casting.

A front part of the power unit 107 is connected to the left and right longitudinally extending portions 131 and 132 at their middle parts in the longitudinal direction of the vehicle body through power unit supporting brackets 136 and 137 (see FIG. 9) for up and down swinging movement. The upper end of the rear cushion unit 138 is connected to the rear end of the left longitudinally extending portion 131. As shown in FIG. 4 and FIG. 8, brackets 139 for supporting a hereinafter described middle part of the lower frame 124 protrude downward from the front ends of the longitudinally extending portions 131 and 132.

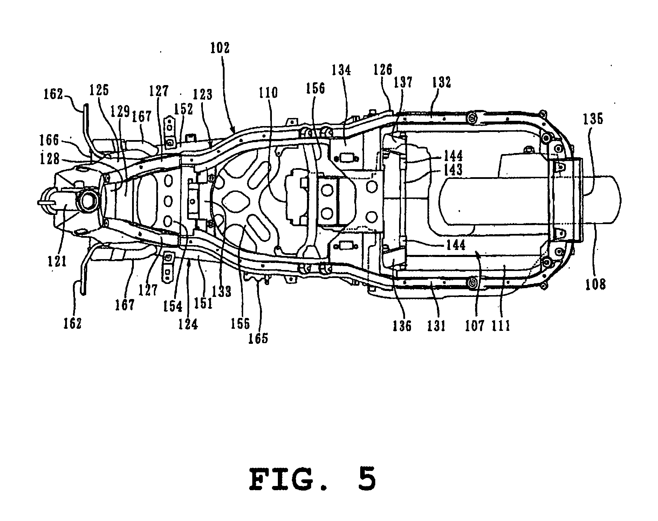

The two power unit supporting brackets 136 and 137 extend downward and rearward from inner sides of the longitudinally extending portions 131 and 132 and resiliently supported with cylindrical bosses 141 and 142 (see FIG. 8), provided on the longitudinally extending portions 131 and 132 two each, through dumper rubbers (not shown). As shown in FIG. 9, a connecting rod 143 interconnects the lower ends of the brackets 136 and 137, and the power unit 107 is supported with the brackets 136 and 137 through the connecting rod 143 for up and down swinging movement. The connection between the connecting rod 143 and the power unit 107 is made by two cylindrical bosses 144 (see FIG. 5 and FIG. 9) which are provided on an axis at spaced points in the width direction of the vehicle and through which the connecting rod 143 extends, so that the bosses 144 can be rotated about the connecting rod 143.

Of the first to third cross members 133 to 135 connecting the left longitudinally extending portion 131 and the right longitudinally extending portion 132, the first and second cross members 133 and 134 connecting the front ends and middle points, respectively, of the longitudinally extending portions 131 and 132 are so shaped that a large storage box (not shown) capable of storing a helmet can be attached therebetween. Namely, the first cross member 133 has a rear side which is gradually curved to the front toward the center in the width direction of the vehicle, and the second cross member 134 has a front side face having a center face which is located rearward of its both end faces. The storage box has a structure similar to one mounted on a conventional scooter and has an opening at the upper end opened and closed by the seat 106.

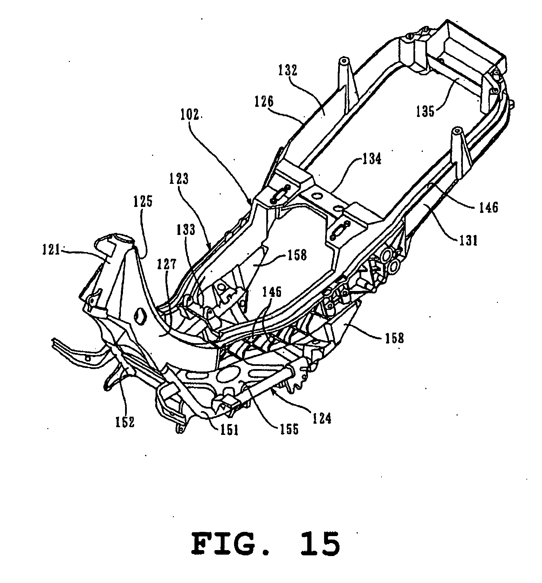

As shown in FIG. 15, the third cross member 135 connecting the rear ends of the left and light longitudinally extending portions 131 and 132 is formed into a shape of a box which opens upward. In this embodiment, the cross member 135 is shaped to serve as a battery storage box for storing a battery (not shown).

The rear half 126 comprising the right and left longitudinally extending portions 131 and 132 and the first to third cross members 133 to 135 has a front part and a rear part molded in different molds, which are in the area designated as A and B, respectively, in Fig. 8. The front part of the rear half 126 is molded in a mold divided in the width direction of the vehicle and the rear part thereof is molded in a mold divided vertically. Thus, each of the right and left longitudinally extending portions 131 and 132 has a front part having a shape of a general U oriented in the width direction of the vehicle as shown in FIG. 13, and a rear part having a shape of a general U oriented vertically as shown in FIG. 14.

By molding the rear half 126 in the molds having different dividing directions, the lateral rigidity of the front parts of the longitudinally extending portions 131 and 132 can be improved, and the vertical rigidity of the rear parts of the longitudinally extending portions 131 and 132 can be improved. The reason why the lateral rigidity of the front parts of the longitudinally extending portions 131 and 132 is improved is that the front parts, which are connected to the two down frames 127 and 126 of the front half 125 and the front part of the power unit 107, mainly receive load in the lateral direction at the time of cornering.

The down frames 127 of the front half 125 connected to the front parts of the longitudinally extending portions 131 and 132 extends downward and rearward, and the front end of the longitudinally extending portions 131 and 132 are firmly supported in the vertical direction by the down frames 127. Thus, by welding the front half 125 and the rear half 126, an upper frame 123 having high torsional rigidity can be formed. In this embodiment, the front parts of the longitudinally extending portions 131 and 132 having a generally sidewise U-shaped cross-section have reinforcing ribs 145 (see FIG. 1, FIG. 3, FIG. 10 and FIG. 12) integrally formed therewith and having an X-shape in side view within the U-shape portions so that the longitudinally extending portions 131 and 132 can have high torsional rigidity by themselves.

The reason why the rigidity of the rear parts of the longitudinally extending portions 131 and 132 is improved is that a cushion reaction force is applied to the rear parts from the rear cushion unit 138. As a result, the upper limit of the cushion reaction force which can be applied from the rear cushion unit 138 to the rear half 126 can be increased, so that even when the weight of the vehicle is increased with an increase in the size of the vehicle body, the vehicle body can be reliably supported. In this embodiment, on the upper surface of each of the rear parts of the longitudinally extending portions 131 and 132, vertical walls 147 and 148 protrude to form a groove 146 (see FIG. 14). The vertical rigidity of the longitudinally extending portions 131 and 132 can be further improved by the grooves 146, and cables 149 connecting other electric components such as the battery or a tail lamp can be stored in the grooves 146.

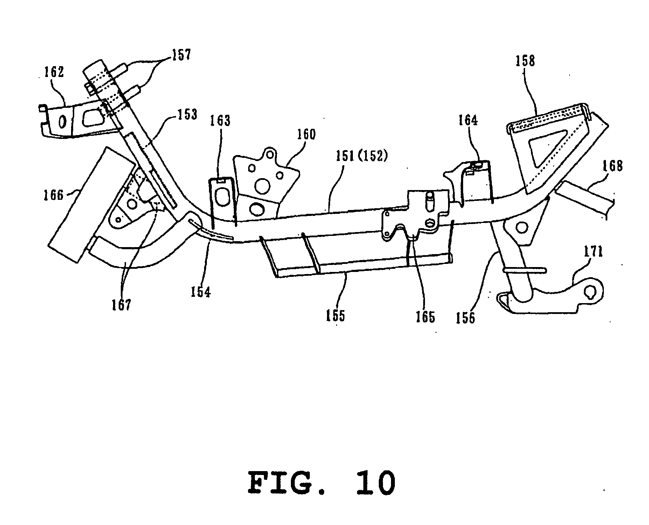

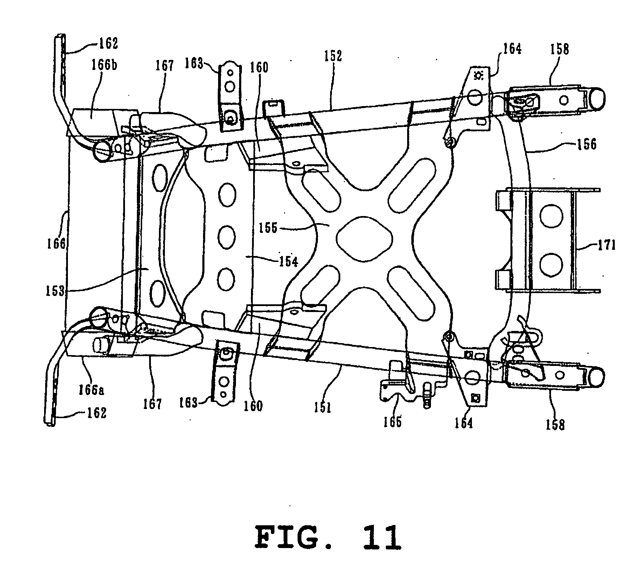

As shown in Fig. 10 and Fig. 11, the lower frame 124 comprises: a pair of right and left pipes 151 and 152 longitudinally extending under the upper frame 123, and first to fourth cross members 153 to 156 interconnecting the pipes 151 and 152.

As shown in Fig. 10, each of the pipes 151 and 152 is of downward convex shape, and has a front end connected to the front half 125 of the upper frame 123 with securing bolts 157 and a rear end secured to the rear half 126 of the upper frame 123 through a connecting bracket 158. The connecting brackets 158 are made of the same iron-base alloy as the pipes 151 and 152 into a box shape, and the lower ends of the connecting brackets are welded to the pipes 151 and 152 and the upper ends thereof are secured to the rear half 126 with securing bolts 159 (see FIG. 4).

Each of the pipes 151 and 152 has a lower part extending longitudinally, and a connecting plate 160 extending upward is provided at the front end of the lower part. By securing the connecting plates 160 and the brackets 139 extending downward from the front end of the rear half 126 with securing bolts 161 as shown in FIG. 4, the pipes 151 and 152 are supported with the upper frame 123.

The right and left pipes 151 and 152 have stays 162 to 164 for supporting a lower part of the vehicle body cover 109 and a stay 165 for supporting a side stand welded thereto, and support a radiator 166 through a bracket (not shown). The stays 162 to 165 are made of the same iron-base alloy as the pipes 151 and 152, so that the side stand supporting stay 165 can support the side stand (not shown) without deteriorating the abrasion resistance and impact resistance.

As shown in FIG.4 and FIG. 10, the radiator 166 is disposed below front parts of the pipes 151 and 152 extending downward and rearward, and downwardly inclined toward the front. Since the radiator 166 is inclined as above, running air hits a front side 125a (a surface backwardly inclined toward the rear) of the front half 125 of the upper frame 123 and changes its flow direction, and then flows into the radiator 166. Thus, the cooling efficiency of the radiator 166 can be improved.

The radiator 166 is of a conventionally well-known lateral water flow type, and of such a size that coolant water tanks 166a and 166b on both sides thereof in the width direction of the vehicle are located below the pipes 151 and 152 as viewed from above as shown in FIG. 11. Since the pipes 151 and 152 extends from the tanks 166a and 166b of the radiator 166 to the vicinity of the engine 110 in the rear, parts of the coolant water passages between the radiator 166 and the engine 110 are formed by the pipes 151 and 152 in this embodiment.

In order to employ the above constitution, the front ends of the pipes 151 and 152 and the tanks 166a and 166b of the radiator 166 are communicated with front coolant water hoses 167, and the rear ends of the pipes 151 and 152 and a coolant water inlet and a coolant water outlet of the engine 110 are communicated with rear coolant water hoses 168. In the coolant water system, relatively high temperature coolant water flowing out of the engine 110 is introduced to the radiator 166 through the pipe 152 on the right side of the vehicle body and coolant water cooled in the radiator 166 is introduced to the engine 110 through the pipe 151 on the left side of the vehicle body. The pipes 151 and 152 are provided with stopper members (not shown) in the vicinity of the parts where the coolant water hoses 167 and 168 are connected in order to prevent coolant water leaking through the openings at both ends thereof or bolt holes therein.

Of the first to fourth cross members 153 to 156 interconnecting the pipes 151 and 152 of the lower frame 124, the first to third cross members 153 to 155 are formed of steel plate and the fourth cross member 156 is formed of a pipe. The third cross member 155 is of X-shape in plan view as shown in FIG. 11, and has four points, namely front and rear, right and left points, welded to the pipes 151 and 152. As shown in FIG. 4, the third cross member 155 supports the fuel tank 169. The fuel tank 169 is housed in a space formed above the third cross member 155, between the third cross member 155 and the storage box. Since the fuel tank 169 is mounted on a lowermost part of the lower frame 124 made of an iron-base alloy, the fuel tank 169 can be strongly protected by the lower frame 124.

The fourth cross member 156 has a downward convex shape as seen from the rear of the vehicle body, and a bracket 171 for a main stand is welded at a center part thereof in the width direction of the vehicle body. The bracket 171 is also made of the iron-base alloy, so that the vehicle body can be strongly supported by the main stand (not shown) attached to the bracket 171 and the abrasion resistance of the portion pivoting the main stand can be improved.

In producing the vehicle body frame 102 constituted as above, the front half 125 and the rear half 126 of the upper frame 123 are respectively molded in molds, and the longitudinally extending portions 131 and 132 of the rear half 126 is welded to the down frames 127 of the front half 125. At the same time, the lower frame 124 is assembled, and the stays, brackets and so force are welded to the lower frame 124. At this time, the radiator 166 and the fuel tank 169 are attached to the lower frame 124.

Then, the power unit 107 is connected to the lower frame 124 through the coolant water hoses 167 and 168, a fuel hose (not shown) and so forth to form an assembly comprising the lower frame 124 and the power unit 107.

Next, the upper frame 123 and the lower frame 124 are put together with securing bolts 157, 159 and 161, and the power unit 107 is attached to the upper frame 123 with the power unit supporting brackets 136, 137. A rear cushion unit 138 is interposed between the rear end of the power unit 107 and the rear end of the upper frame 123.

In the upper frame 123 of the vehicle body frame 102 assembled as above, the rear ends of box-shaped down frames 127 paired in the width direction of the vehicle are connected through the rear half 126 to form a closed shape in plan view, so that the upper frame 123 is strongly formed in the longitudinal and transverse directions of the vehicle body. At the same time, the upper frame 123 can be reinforced from below by the lower frame 124.

Therefore, the vehicle body frame 102 can be strongly formed in spite of the fact that the upper frame 123 is made of an aluminum alloy.

Since the front part of the rear half 126, which is formed using a mold divided in the width direction of the vehicle and thus has a generally sidewise U-shaped cross-section, has high lateral rigidity, the torsional rigidity of the front part of the vehicle body frame 102 can be improved by connecting the rear half 126 to the front half 125 extending downward and rearward. The rear part of the vehicle body frame 102, which supports the rear cushion unit 138, has high vertical rigidity, so that the upper limit of cushion reaction force which can be applied from the rear cushion unit 138 to the rear half 126 can be increased.

Additionally in the vehicle body frame 102, the front part of the rear half 126 has a generally U-shaped cross-section and the reinforcing ribs 145 having an X-shape in side view are integrally formed therewith within the U-shape. Since the reinforcing ribs 145 reinforce the front part of the rear half 126, the torsional rigidity of the front part can be further improved.

Although the down tubes 22 and the lower frame 124 are made of an iron-base alloy in the first and second embodiments mentioned above, these frame members may be made of an aluminum alloy. With this constitution, a further weight reduction can be achieved.

As has been described above, the power unit is supported with the upper frame and vehicle components located in front of the power unit are supported with the lower frame. Thus, the vehicle components can be separately assembled to the upper and lower frames. Therefore, the vehicle components can be assembled to the upper or lower frame without being interfered with by other parts. Therefore, there can be provided a vehicle body frame for a scooter type motorcycle which can facilitate the assembly work and improve productivity.

Further, the upper frame can be reinforced from below by the lower frame.

Thus, the upper frame can be strongly formed in spite of being made of an aluminum alloy. Therefore, there can be provided a vehicle body frame for a scooter type motorcycle which has high rigidity and is light in weight.

Furthermore, the front part of the rear half which pivots the power unit has high lateral rigidity. Thus, the torsional rigidity of the front part of the vehicle body frame can be improved by connecting the rear half to the front half. Also, the rear part of the rear half which supports the rear cushion unit has high vertical rigidity, so that the upper limit of cushion reaction force which can be applied from the rear cushion unit to the rear half can be increased. Therefore, there can be achieved a vehicle body frame for a scooter type motorcycle which can mount a large power unit without losing rigidity.

According to a preferred embodiment, the reinforcing ribs reinforce the front part of the rear half and enhance the torsional rigidity of the front part. Therefore, the torsional rigidity of the front part of the upper frame can be further improved, thus improving riding comfort.

Moreover, the front part of the rear half has high lateral rigidity. Thus, the torsional rigidity of the front part of the vehicle body frame can be improved by connecting the rear half to the front half. Also, since the rear part of the rear half has high vertical rigidity, the upper limit of the load which can be applied from the rear wheel side to the rear half can be increased. Therefore, there can be provided a vehicle body frame for a scooter type motorcycle which is made of an aluminum alloy and thus light in weight and which has high rigidity.

Accordingly, a vehicle body frame for a scooter type motorcycle is provided which can be divided vertically and can facilitate the work of assembling vehicle components thereto, the rigidity of the vehicle body frame is improved while reducing the weight thereof.

A first frame 35 extending from a head pipe 18 toward the rear of a vehicle body and a second frame 37 extending downward from the first frame 35 are provided. The first frame 35 extends from the head pipe 18 to an end of the vehicle body and has a front part to which a front end of the second frame 37 is detachably connected. The first frame 35 has a rear part to which a rear end of the second frame 37 is detachably connected and which supports a unit swing type power unit including a rear wheel 9. The second frame 37 supports a fuel tank 30 and a radiator 32 housed between the first frame 35 and the second frame 37.

Accordingly, the present teaching relates to a scooter type motorcycle. It aims to facilitate the work of assembling vehicle components and to improve the rigidity of the vehicle body frame while reducing the weight thereof. This target is performed by a scooter type motorcycle comprising a vehicle body, wherein said vehicle body frame comprises an upper frame extending from a head pipe toward a rear end of a vehicle body of the scooter type motorcycle, and a lower frame extending downward and being disconnectable from the upper frame, and wherein a unit swing type power unit including a rear wheel is pivotably connected to the upper frame.

## Claims

1. Scooter type motorcycle comprising a vehicle body frame (3,102), wherein said vehicle body frame (3,102) comprises an upper frame (35,123) extending from a head pipe (18,121) toward a rear end of a vehicle body (2) of the scooter type motorcycle (1,101), and a lower frame (37,124) extending downward from the upper frame (35,123), and wherein a unit swing type power unit (15,107) including a rear wheel (9,108) is pivotably connected to the upper frame (35,123),
**characterized in that**
the lower frame (37,124) is disconnectable from the upper frame (35,123) and supports a fuel tank (30,169) such that said fuel tank (30,169) and said lower frame (37,124) are disconnectable from said upper frame (35,123).

2. Scooter type motorcycle according to claim 1, **characterized in that** the upper frame (35,123) has a front portion (19,125) to which a front end of the lower frame (37,124) is detachably connected and a rear portion (21,126) to which a rear end of the lower frame (37,124) is detachably connected.

3. Scooter type motorcycle according to claim 1 or 2, **characterized in that** the lower frame (37,124) supports further vehicle components such as a radiator (32,166) and/or a battery housed between the lower frame (37,124) and the upper frame (35,123), which can be divided vertically from each other.

4. Scooter type motorcycle according to one of the claims 1 to 3, **characterized in that** said upper frame (35,123) extending from said head pipe (18,121) towards the rear end of said vehicle body (2) is made of an aluminum alloy and **in that** said lower frame (37,124) extending downward from the upper frame (35,123) is made of an iron alloy.

5. Scooter type motorcycle according to one of the claims 1 to 4, **characterized in that** the upper frame (35,123) comprises a front portion (19,123) including a pair of right and left down frames (19,127) having a closed transverse cross-section and extending from the head pipe (18,121) to foot rests (122), and a rear portion (21,126) extending backward from a rear end of the front portion (19,123).

6. Scooter type motorcycle according to one of the claims 1 to 5, **characterized in that** the rear portion (126) of the upper frame (123) has a front part (A) formed into a generally U-shape having an open side facing generally in a width direction of the vehicle body and a rear part (B) formed generally U-shaped having an open side facing generally in a vertical direction of the vehicle body.

7. Scooter type motorcycle according to one of the claims 1 to 6, **characterized in that** the rear portion (126) of the upper frame (123) has reinforcing ribs (145).

8. Scooter type motorcycle according to one of the claims 1 to 7, **characterized in that** down frames (19,127) at the front portion (19,123) of the upper frame (35,123) and/or extending portions (21,131,132) at the rear portion (21,126) are interconnected with one another by means of cross members (20,128,129,133,134,135), respectively.

9. Scooter type motorcycle according to claim 8, **characterized in that** said cross members (20,128,129,133,134,135) are formed integrally with said portions (19,123,21,131,132) of said upper frame (35,123) to which they are connected to, respectively.

10. Scooter type motorcycle according to claim 8 or 9, **characterized in that** a cross member (135) connecting said right and left extending portions (131,132) is shaped box-like for receiving a battery.

11. Scooter type motorcycle according to one of the claims 1 to 10, **characterized in that** said upper vehicle frame (123) comprises said front portion (123), said front part (A) at said rear portion (126) and said rear part (B) at said rear portion (126) being molded individually by aluminum alloy casing and being welded together into one piece.

## Patentansprüche

1. Motorrad vom Rollertyp, aufweisend einen Fahrzeugkarosserierahmen (3, 102), wobei der Fahrzeugkarosserierahmen (35, 123) aufweist einen oberen Rahmen (35, 123), der sich von einem Kopfrohr (18, 121) in Richtung zu einem hinteren Ende einer Fahrzeugkarosserie (2) des Motorrads (1, 101) vom Rollertyp erstreckt, und einen unteren Rahmen (37, 124), der sich von dem oberen Rahmen (35, 123) nach unten erstreckt, und wobei eine Antriebseinheit (15, 107) vom Schwingeinheit- Typ, die ein Hinterrad (9, 108) enthält, schwenkbar mit dem oberen Rahmen (35, 123) verbunden ist,
**dadurch gekennzeichnet, dass**
der untere Rahmen (37, 124) von dem oberen Rahmen (35, 123) lösbar ist und einen Kraftstofftank (30, 169) derart lagert, dass der Kraftstofftank (30, 169) und der untere Rahmen (37, 124) von dem oberen Rahmen (35, 123) lösbar sind.

2. Motorrad vom Rollertyp nach Anspruch 1, **dadurch gekennzeichnet, dass** der obere Rahmen (35, 123) einen vorderen Abschnitt (19, 125) hat, mit dem ein vorderes Ende des unteren Rahmens (37, 124) lösbar verbunden ist, und einen hinteren Abschnitt (21, 126), mit dem ein hinteres Ende des unteren Rahmens (37, 124) lösbar verbunden ist.

3. Motorrad vom Rollertyp nach Anspruch 1 oder 2, **dadurch gekennzeichnet, dass** der untere Rahmen (37, 124) weitere Fahrzeugbauteile lagert, wie z. B. einen Kühler (32, 168)und / oder eine Batterie, untergebracht zwischen dem unteren Rahmen (37, 124) und dem oberen Rahmen (35, 123), die voneinander vertikal geteilt werden können.

4. Motorrad vom Rollertyp nach einem der Ansprüche 1 bis 3, **dadurch gekennzeichnet, dass** sich der obere Rahmen (35, 123), der sich von dem Kopfrohr (18, 121) in Richtung zu dem hinteren Ende der Fahrzeugkarosserie (2) erstreckt, aus einer Aluminiumlegierung hergestellt ist und **dadurch**, dass sich der untere Rahmen (37, 124), der sich von dem oberen Rahmen (35, 123) nach unten erstreckt, aus einer Eisenlegierung hergestellt ist.

5. Motorrad vom Rollertyp nach einem der Ansprüche 1 bis 4, **dadurch gekennzeichnet, dass** der obere Rahmen (35, 123) aufweist einen vorderen Abschnitt (19, 123), der ein Paar von rechten und linken Abwärtsrahmen (19, 127) mit einem transversal geschlossenen Querschnitt enthält, und einen hinteren Abschnitt (21, 126), der sich von einem hinteren Ende des vorderen Abschnittes (19, 123) nach hinten erstreckt.

6. Motorrad vom Rollertyp nach einem der Ansprüche 1 bis 5, **dadurch gekennzeichnet, dass** der hintere Abschnitt (126) des oberen Rahmens (123) ein vorderes Teil (A) hat, gebildet in einer im Wesentlichen U- Form, mit einer offenen Seite, die sich im Wesentlichen einer Richtung der Breite der Fahrzeugkarosserie zugewandt ist, und ein hinteres Teil (B), gebildet im Wesentlichen U- förmig, mit einer offenen Seite, die im Wesentlichen einer vertikalen Richtung der Fahrzeugkarosserie zugewandt ist.

7. Motorrad vom Rollertyp nach einem der Ansprüche 1 bis 6, **dadurch gekennzeichnet, dass** der hintere Abschnitt (126) des oberen Rahmens (123) Verstärkungsrippen (145) hat.

8. Motorrad vom Rollertyp nach einem der Ansprüche 1 bis 7, **dadurch gekennzeichnet, dass** die Abwärtsrahmen (19, 127) an dem vorderen Abschnitt (19, 123) des oberen Rahmens (35, 123) und / oder die sich erstreckenden Abschnitte (21, 131, 132) an dem hinteren Abschnitt (21, 126) miteinander jeweils durch Querteile (20, 128, 129, 133, 134, 135) verbunden sind.

9. Motorrad vom Rollertyp nach Anspruch 8, **dadurch gekennzeichnet, dass** die Querteile (20, 128, 129, 133, 134, 135) mit den Abschnitten (19, 123, 21, 131, 132) des oberen Rahmens (35, 123), mit denen sie verbunden sind, jeweils einstückig ausgebildet sind.

10. Motorrad vom Rollertyp nach Anspruch 8 oder 9, **dadurch gekennzeichnet, dass** ein Querteil (135), das die rechten und linken sich erstreckenden Abschnitte (131, 132) verbindet, zum Aufnehmen der Batterie kastenförmig geformt ist.

11. Motorrad vom Rollertyp nach einem der Ansprüche 1 bis 10, **dadurch gekennzeichnet, dass** der obere Fahrzeugrahmen (123) den vorderen Abschnitt (123), das vordere Teil (A) an dem hinteren Abschnitt (126) und das hintere Teil (B) an dem hinteren Abschnitt (126) aufweist, die einzeln durch Aluminiumlegierungsgießen gegossen werden und die zu einem Teil zusammengeschweißt sind.

## Revendications

1. Motocyclette de type scooter comprenant un châssis de carrosserie de véhicule (3, 102), dans laquelle ledit châssis de carrosserie de véhicule (3, 102) comprend un châssis supérieur (35, 123) s'étendant à partir d'un tube de tête (18, 121) vers une extrémité arrière d'une carrosserie de véhicule (2) de la motocyclette de type scooter (1, 101), et un châssis inférieur (37, 124) s'étendant vers le bas à partir du châssis supérieur (35, 123) et dans laquelle une unité de puissance de type oscillant (15, 107) comprenant une roue arrière (9, 108) est raccordée de manière pivotante au châssis supérieur (35, 123),
**caractérisée en ce que :**
le châssis inférieur (37, 124) peut être déconnecté du châssis supérieur (35, 123) et supporte un réservoir de carburant (30, 169) de sorte que ledit réservoir de carburant (30, 169) et ledit châssis inférieur (37, 124) peuvent être déconnectés dudit châssis supérieur (35, 123).

2. Motocyclette de type scooter selon la revendication 1, **caractérisée en ce que** le châssis supérieur (35, 123) a une partie avant (19, 125) à laquelle une extrémité avant du châssis inférieur (37, 124) est raccordée de manière détachable et une partie arrière (21, 126) à laquelle une extrémité arrière du châssis inférieur (37, 124) est raccordée de manière détachable.

3. Motocyclette de type scooter selon la revendication 1 ou 2, **caractérisée en ce que** le châssis inférieur (37, 124) supporte en outre des composants de véhicule tel qu'un radiateur (32, 166) et/ou une batterie logée entre le châssis inférieur (37, 124) et le châssis supérieur (35, 123) qui peuvent être séparés verticalement l'un de l'autre.

4. Motocyclette de type scooter selon l'une des revendications 1 à 3, **caractérisée en ce que** ledit châssis supérieur (35, 123) s'étendant à partir du tube de tête (18, 121) vers l'extrémité arrière de ladite carrosserie de véhicule (2) est réalisé avec un alliage d'aluminium et **en ce que** ledit châssis inférieur (37, 124) s'étendant vers le bas à partir du châssis supérieur (35, 123) est réalisé avec un alliage de fer.

5. Motocyclette de type scooter selon l'une des revendications 1 à 4, **caractérisée en ce que** le châssis supérieur (35, 123) comprend une partie avant (19, 123) comprenant une paire de châssis descendants droit et gauche (19, 127) ayant une section transversale fermée et s'étendant à partir de la tubulure de refoulement (18, 121) jusqu'aux repose-pieds (122), et une partie arrière (21, 126) s'étendant vers l'arrière à partir d'une extrémité arrière de la partie avant (19, 123).

6. Motocyclette de type scooter selon l'une quelconque des revendications 1 à 5, **caractérisée en ce que** la partie arrière (126) du châssis supérieur (123) a une partie avant (A) formée généralement selon une forme de U ayant un côté ouvert orienté généralement dans le sens de la largeur de la carrosserie de véhicule et une partie arrière (B) formée généralement en forme de U ayant un côté ouvert orienté généralement dans une direction verticale de la carrosserie de véhicule.

7. Motocyclette de type scooter selon l'une quelconque des revendications 1 à 6, **caractérisée en ce que** la partie arrière (126) du châssis supérieur (123) a des nervures de renforcement (145).

8. Motocyclette de type scooter selon l'une quelconque des revendications 1 à 7, **caractérisée en ce que** les châssis descendants (19, 127) au niveau de la partie avant (19, 123) du châssis supérieur (35, 123) et/ou des parties d'extension (21, 131, 132) au niveau de la partie arrière (21, 126) sont interconnectés entre eux au moyen de traverses (20, 128, 129, 133, 134, 135) respectivement.

9. Motocyclette de type scooter selon la revendication 8, **caractérisée en ce que** lesdites traverses (20, 128, 129, 133, 134, 135) sont formées de manière solidaire avec lesdites parties (19, 123, 21, 131, 132) dudit châssis supérieur (35, 123) auquel elles sont raccordées, respectivement.

10. Motocyclette de type scooter selon la revendication 8 ou 9, **caractérisée en ce qu'**une traverse (135) raccordant lesdites parties d'extension droite et gauche (131, 132) est en forme de boîte pour recevoir une batterie.

11. Motocyclette de type scooter selon l'une quelconque des revendications 1 à 10, **caractérisée en ce que** ledit châssis supérieur de véhicule (123) comprend ladite partie avant (123), ladite partie avant (A) au niveau de ladite partie arrière (126) et ladite partie arrière (B) au niveau de ladite partie arrière (126) qui sont moulées individuellement par moulage d'alliage d'aluminium et qui sont soudées ensemble en une seule pièce.
